# EUROPEAN PATENT APPLICATION

(11) **EP 4 600 308 A1**
(43) Date of publication of application: **13.08.2025**
(21) Application number: 23874636.6
(22) Date of filing: 19.09.2023
(51) Int. Cl.: C08L 71/12, C08K 7/24, C08L 23/02, C08L 23/08, C08L 23/12, C08L 25/04, C08L 53/02

(54) **RESIN COMPOSITION, PELLET AND MOLDED BODY**

(30) Priority: 04.10.2022 JP 2022160055; 01.06.2023 JP 2023090808
(71) Applicant: GLOBAL POLYACETAL CO., LTD., Tokyo 105-0021 (JP)
(72) Inventor: TAKANO Yoichi, Hiratsuka-shi, Kanagawa 254-0016 (JP)
(74) Representative: Zimmermann & Partner Patentanwälte mbB
(86) International application number: PCT/JP2023/033880
(87) International publication number: WO 2024/075507

(57) **Abstract**

To provide a resin composition, a pellet and a molded product. A resin composition comprising: a polyphenylene ether resin (a), a polypropylene homopolymer (b), a polyolefin copolymer (c) having a melt flow rate (MFR) of 0.3 to 25 g/10 minutes under a load of 2.16 kg and at a temperature of 230°C, as measured in accordance with JIS K7210, a hollow inorganic filler (d), and a block copolymer (e), wherein the block copolymer (e) is a hydrogenated product including a vinylaromatic compound block (e1) and an isoprene polymer block (e2), and the content of the hollow inorganic filler (d) in 100 mass parts of the resin composition is 6 to 30 parts by mass.

## Description

### [Technical Field]

The present invention relates to a resin composition, a pellet and a molded product. The present invention relates particularly to a resin composition containing a polyphenylene ether resin as main component.

### [Background Art]

A resin composition including a polyphenylene ether resin as base resin (hereinafter, referred to as "polyphenylene ether resin composition" in some cases) is characterized by heat resistance, electric properties, dimensional stability, impact resistance, low specific gravity, etc. Accordingly, a polyphenylene ether resin composition has been widely used as various electric/electronic components, office equipment components, automobile components, building materials and other various external finishing materials, and industrial products. Also, in order to reinforce a polyphenylene ether resin composition, a reinforcement filler may be blended.

On the other hand, a hollow inorganic filler is occasionally blended in a thermoplastic resin as a reinforcing filler from the viewpoint of weight reduction.

For example, Patent Literature 1 discloses a resin composition including 20 mass% or more and 99 mass% or less of at least one or more thermoplastic resins (A), 1 mass% or more and 80 mass% or less of a hollow microsphere (B) and 1 mass% or more and 100 mass% or less of an organic fiber (C) relative to 100 mass% of the total of the thermoplastic resins (A) and the hollow microspheres (B), wherein the organic fiber (C) has a melting point and a decomposition initiation temperature higher than the melting point of the thermoplastic resin (A).

### [Citation List]

### [Patent Literature]

[Patent Literature 1] Japanese Patent Laid-Open No. 2016-108372

### [Summary Of Invention]

### [Technical Problem]

As described above, use of the hollow inorganic filler as reinforcement filler allows the weight of a resin composition or a molded product made from the resin composition to be reduced. However, the impact resistance of the molded product tends to be lowered. Also, blending an impact modifier for improving impact resistance tends to lower the heat resistance.

An object of the present invention is to solve the problem, and in other words, an object of the present invention is to provide a resin composition including a polyphenylene ether resin and a hollow inorganic filler, having a low specific gravity, from which a molded product excellent in impact resistance, with the heat resistance inherent to the polyphenylene ether resin maintained, can be provided, and a pellet and the molded product.

### [Solution to Problem]

The present inventors conducted research to address the above-mentioned problems, and as a result, discovered that the problems described above could be solved by blending a predetermined polyolefin and a predetermined block copolymer as well as a hollow filler into the polyphenylene ether resin.

Specifically, the problems described above are solved by the following means.
<1> A resin composition comprising:
   a polyphenylene ether resin (a),
   a polypropylene homopolymer (b),
   a polyolefin copolymer (c) having a melt flow rate (MFR) of 0.3 to 25 g/10 minutes under a load of 2.16 kg and at a temperature of 230°C, as measured in accordance with JIS K7210,
   a hollow inorganic filler (d), and
   a block copolymer (e),
   wherein the block copolymer (e) is a hydrogenated product including a vinylaromatic compound block (e1) and an isoprene polymer block (e2), and the content of the hollow inorganic filler (d) in 100 mass parts of the resin composition is 6 to 30 parts by mass.
<2> The resin composition according to <1>, wherein the content of the hollow inorganic filler (d) in 100 mass parts of the resin composition is 6 to 20 parts by mass.
<3> The resin composition according to <1> or <2>, wherein the hollow inorganic filler (d) has a compressive fracture strength of 105 to 130 MPa.
<4> The resin composition according to <1> to <3>, wherein relative to 100 mass% of the total of polyphenylene ether resin (a), the polypropylene homopolymer (b) and the polyolefin copolymer (c), the content of the polyphenylene ether resin (a) is 40 to 65 mass%, and the total content of the polypropylene homopolymer (b) and the polyolefin copolymer (c) is 35 to 60 mass%.
<5> The resin composition according to any one of <1> to <4>, further comprising a polystyrene resin (f) having a weight average molecular weight (Mw) of 3000 to 20000.
<6> The resin composition according to any one of <1> to <5>, wherein the block copolymer (e) has a content of vinylaromatic compound unit of 50 mass% or more and less than 80 mass%.
<7> The resin composition according to any one of <1> to <6>,
   wherein the hollow inorganic filler (d) has a compressive fracture strength of 105 to 130 MPa,
   relative to 100 mass% of the total of polyphenylene ether resin (a), the polypropylene homopolymer (b) and the polyolefin copolymer (c), the content of the polyphenylene ether resin (a) is 40 to 65 mass%, and the total content of the polypropylene homopolymer (b) and the polyolefin copolymer (c) is 35 to 60 mass%,
   the resin composition further comprises a polystyrene resin (f) having a weight average molecular weight (Mw) of 3000 to 20000, and
   the block copolymer (e) has a content of vinylaromatic compound unit of 50 mass% or more and less than 80 mass%.
<8> A pellet comprising the resin composition according to any one of <1> to <7>.
<9> A molded product molded from the resin composition according to any one of <1> to <7>.
<10> A molded product formed from the pellet according to <8>.

### [Advantageous Effects of Invention]

A resin composition including a polyphenylene ether resin and a hollow inorganic filler, having a low specific gravity, from which a molded product excellent in impact resistance, with the heat resistance inherent to the polyphenylene ether resin maintained, can be provided, and a pellet and the molded product can be provided.

### [Description of Embodiment]

An embodiment of the present invention (in the following, referred to simply as "present embodiment") is described in detail in the following. The present embodiment is an exemplification for illustrating the present invention, and the present invention is not limited only to the present embodiment.

In the present specification, "to" is used to include the numerical values prefixed and postfixed thereto as a lower limit and an upper limit.

In the present specification, various physical properties and characteristic values are at 23°C unless otherwise specified.

In the case where the measurement method or the like described in a standard shown in the present specification is different depending on the year published, the standard as of January 1, 2022 is employed unless otherwise specified.

The resin composition of the present embodiment comprises a polyphenylene ether resin (a), a polypropylene homopolymer (b), a polyolefin copolymer (c) having a melt flow rate (MFR) of 0.3 to 25 g/10 minutes under a load of 2.16 kg and at a temperature of 230°C, as measured in accordance with JIS K7210 (in the present specification, referred to as "polyolefin copolymer (c)" in some cases), a hollow inorganic filler (d), and a block copolymer (e), wherein the block copolymer (e) is a hydrogenated product including a vinylaromatic compound block (e1) and an isoprene polymer block (e2), and the content of the hollow inorganic filler (d) in 100 mass parts of the resin composition is 6 to 30 parts by mass.

With such a formulation, a resin composition including a polyphenylene ether resin and a hollow inorganic filler, having a low specific gravity, from which a molded product excellent in impact resistance, with the heat resistance inherent to the polyphenylene ether resin maintained, can be provided can be provided.

Blending the hollow inorganic filler (d) into the polyphenylene ether resin (a) can lower the specific gravity of the resin composition. Addition of the polypropylene homopolymer (a), which has a lower specific gravity in comparison with the polyphenylene ether resin (a), also lowers the specific gravity of the resin composition.

However, blending the hollow inorganic filler (d) tends to worsen the impact resistance. The polypropylene homopolymer (b) also tends to worsen the impact resistance. In the present embodiment, however, it is presumed that blending the polyolefin copolymer (c) allows worsening of the impact resistance resulting from blending the polypropylene homopolymer (b) to be suppressed. The reason is presumed that the polypropylene homopolymer (b) and the polyolefin copolymer (c) are mixed with each other in a part and dispersed in another part so as to form a dispersion structure capable of absorbing a large impact energy.

Further, the resin composition in the present embodiment includes a hydrogenated product of the block copolymer (e) including the vinylaromatic compound block (e1) and the isoprene polymer block (e2). It is presumed that the component (e) itself is an elastomer to easily absorb impact energy, and further, due to the vinylaromatic compound block (e1) having a structure similar to that of the polyphenylene resin (a) and the isoprene polymer block (e2) having a structure similar to that of polypropylene homopolymer (b), interacts also as compatibilizer resulting from high affinity with the respective components, so that the polyphenylene ether resin is finely dispersed to improve the impact resistance and maintain the heat resistance.

### <Polyphenylene ether resin (a)>

The resin composition of the present embodiment contains a polyphenylene ether resin (a).

The polyphenylene ether resin (a) for use in the resin composition of the present embodiment may be a known polyphenylene ether resin, and examples of thereof may include a polymer having a structural unit represented by the following formula in the main chain. The polyphenylene ether resin (a) may be any one of a homopolymer and a copolymer. 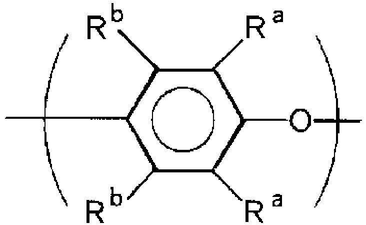 wherein two R^{a} each independently represent a hydrogen atom, a halogen atom, a primary or secondary alkyl group, an aryl group, an aminoalkyl group, a halogenated alkyl group, a hydrocarbon oxy group, or a halogenated hydrocarbon oxy group, and two R^{b} each independently represent a hydrogen atom, a halogen atom, a primary or secondary alkyl group, an aryl group, a halogenated alkyl group, a hydrocarbon oxy group or a halogenated hydrocarbon oxy group. Both of the two R^{a} are not hydrogen atoms in parallel.

It is preferable that R^{a} and R^{b} each independently be a hydrogen atom, a primary or secondary alkyl group, or aryl group. Preferred examples of the primary alkyl group include a methyl group, an ethyl group, an n-propyl group, an n-butyl group, an n-amyl group, an isoamyl group, a 2-methylbutyl group, a 2,3-dimethylbutyl group, a 2-, 3- or 4-methylpentyl group, and a heptyl group. Preferred examples of the secondary alkyl group include an isopropyl group, a sec-butyl group and a 1-ethylpropyl group. In particular, it is preferable that R^{a} be a primary or secondary alkyl group having 1 to 4 carbon atoms or a phenyl group. It is preferable that R^{b} be a hydrogen atom.

Preferred examples of the homopolymer of the polyphenylene ether resin (a) include a polymer of 2,6-dialkylphenylene ether such as poly(2,6-dimethyl-1,4-phenylene ether), poly(2,6-diethyl-1,4-phenylene ether), poly(2,6-dipropyl-1,4-phenylene ether), poly(2-ethyl-6-methyl-1,4-phenylene ether), and poly(2-methyl-6-propyl-1,4-phenylene ether). Examples of the copolymer include a 2,6-dialkylphenol/2,3,6-trialkylphenol copolymer such as 2,6-dimethylphenol/2,3,6-trimethylphenol copolymer, 2,6-dimethylphenol/2,3,6-triethylphenol copolymer, 2,6-diethylphenol/2,3,6-trimethylphenol copolymer, and 2,6-dipropylphenol/2,3,6-trimethylphenol copolymer, a graft copolymer obtained by graft-polymerizing poly(2,6-dimethyl-1,4-phenylene ether) with styrene, and a graft copolymer obtained by graft-polymerizing 2,6-dimethylphenol/2,3,6-trimethylphenol copolymer with styrene.

As the polyphenylene ether resin (a) of the present embodiment, poly(2,6-dimethyl-1,4-phenylene ether) and 2,6-dimethylphenol/2,3,6-trimethylphenol random copolymer are particularly preferred. Alternatively, a polyphenylene ether resin with a specified number of terminal groups and a specified content copper as described in Japanese Patent Laid-Open No. 2005-344065 may be suitably used.

The polyphenylene ether resin (a) has an intrinsic viscosity measured in chloroform at 30°C of preferably 0.2 to 0.8 dL/g, more preferably 0.3 to 0.6 dL/g. With an intrinsic viscosity of 0.2 dL/g or more, the mechanical strength of the resin composition tends to be further improved, and with an intrinsic viscosity of 0.8 dL/g or less, the fluidity is further improved and the forming tends to be easier. Alternatively, two or more polyphenylene ether resins (a) having a different intrinsic viscosity may be used in combination to adjust the intrinsic viscosity to the range.

The production method of the polyphenylene ether resin (a) for use in the present embodiment is not particularly limited, and, for example, a known oxidative polymerization of a monomer such as 2,6-dimethylphenol in the presence of an amine copper catalyst may be employed. On this occasion, under selected reaction conditions, the intrinsic viscosity may be controlled to a desired range. The control of the intrinsic viscosity is achieved by selecting conditions such as polymerization temperature, polymerization time and an amount of catalyst.

In the resin composition of the present embodiment, the content of the polyphenylene ether resin (a) is preferably 20.0 parts by mass or more, more preferably 25.0 parts by mass or more, still more preferably 28.0 parts by mass or more, further preferably 30.0 parts by mass or more, and furthermore preferably 33.0 parts by mass or more, relative to 100 parts by mass of the resin composition. With a content equal to or more than the lower limits, the heat resistance (in particular, deflection temperature under load) of a resulting molded product tends to be further improved. The upper limit of the content of the polyphenylene ether resin (a) in 100 parts by mass of the resin composition is preferably 45.0 parts by mass or less, more preferably 40.0 parts by mass or less, and still more preferably 38.0 parts by mass or less. With a content equal to or less than the upper limits, the effects of improving fluidity and impact resistance of the resin composition and lowering the specific gravity of the resulting molded product tend to be further improved.

The resin composition of the present embodiment may include only one type of polyphenylene ether resin (a), or two or more types. In the case where two or more types are included, it is preferable that the total amount be controlled to the range.

### <Polypropylene homopolymer (b)>

The resin composition of the present embodiment includes a polypropylene homopolymer (b).

The polypropylene homopolymer (b) for use in the present embodiment is a polymer mainly composed of polypropylene.

In other words, the polypropylene homopolymer (b) may include other monomer units in the range without departing from the spirit of the present invention. However, the polypropylene homopolymer (b) in the present embodiment includes preferably 95 mass% or more (more preferably 97 mass% or more, still more preferably 99 mass% or more) of propylene units.

The polypropylene homopolymer (b) may contain a crystal nucleating agent. As the crystal nucleating agent, a known crystal nucleating agent may be used, and examples thereof include a metal salt of carboxylic acid, a dibenzylidene sorbitol derivative, and an alkali metal phosphate.

Specific examples of the crystal nucleating agent include sodium benzoate, aluminum adipate, pt-aluminum butylbenzoate, 1,3,2,4-dibenzylidene sorbitol, 1,3,2,4-bis(p-methylbenzylidene)sorbitol, 1,3,2,4-bis(p-ethyl benzylidene)sorbitol, 1,3,2,4-bis(3,4-dimethyl benzylidene)sorbitol, sodium bis(4-t-butylphenyl)phosphate, sodium bis(4-t-methylphenyl)phosphate, potassium bis(4,6-di-t-butylphenyl)phosphate, sodium 2,2'-methylene-bis(4,6-di-t-butylphenyl)phosphate, and sodium 2,2'-ethylidene-bis(4,6-di-t-butylphenyl)phosphate.

The polypropylene homopolymer (b) has a melt flow rate (MFR) under a load of 2.16 kg and at a temperature of 230°C, as measured in accordance with JIS K7210, of preferably 0.1 g/10 minutes or more, more preferably 0.5 g/10 minutes or more, still more preferably 1.0 g/10 minutes or more, further preferably 1.0 g/10 minutes or more, and furthermore preferably 2.0 g/10 minutes or more. With a melt flow rate equal to or more than the lower limit, the fluidity of the resin composition tends to be improved. The MFR is preferably 10.0 g/10 minutes or less, more preferably 8.0 g/10 minutes or less, still more preferably 5.0 g/10 minutes or less, further preferably 4.0 g/10 minutes or less, and furthermore preferably 3.0 g/10 minutes or more. With a melt flow rate equal to or less than the upper limit, the nominal tensile strain and the impact resistance of the molded product tend to be improved.

In the case where the resin composition of the present embodiment includes two or more types of polypropylene homopolymers (b), it is preferable that MRF of the mixture of the polypropylene homopolymers (b) be in the range described above.

The content of the polypropylene homopolymer (b) in the resin composition of the present embodiment is preferably 20.0 parts by mass or more, more preferably 23.0 parts by mass or more, and still more preferably 25.0 parts by mass or more, in 100 parts by mass of the resin composition. With a content equal to or more than the lower limit, the effects of improving fluidity of the resin composition and lowering specific gravity of the molded product tend to be further improved. The upper limit of the content of the polypropylene homopolymer (b) is preferably 38.0 parts by mass or less, more preferably 35.0 parts by mass or less, and still more preferably 32.0 parts by mass or less, in 100 parts by mass of the resin composition. With a content equal to or less than the upper limit, lowering of the impact resistance and the heat resistance of the molded product tends to be suppressed.

The resin composition of the present embodiment may include only one type of the polypropylene homopolymer (b) or two types or more. In the case where two or more types are included, it is preferable that the total content be in the range described above.

### <Polyolefin copolymer (c)>

The resin composition of the present embodiment includes a polyolefin copolymer (c) having a melt flow rate (MFR) under a load of 2.16 kg and at a temperature of 230°C, as measured in accordance with JIS K7210, of preferably 0.3 to 25 g/10 minutes.

The MFR is preferably 0.5 g/10 minutes or more, more preferably 1.0 g/10 minutes or more, still more preferably 3.0 g/10 minutes or more, further preferably 5.0 g/10 minutes or more, and furthermore preferably 5.5 g/10 minutes or more. With a melt flow rate equal to or more than the lower limit, the fluidity of the resin composition tends to be improved. The MFR is preferably 20.0 g/10 minutes or less, more preferably 15.0 g/10 minutes or less, still more preferably 10.0 g/10 minutes or less, further preferably 8.0 g/10 minutes or less, and furthermore preferably 7.5 g/10 minutes or more. With a melt flow rate equal to or less than the upper limit, the impact resistance of the molded product tends to be improved.

In the case where the resin composition of the present embodiment includes two or more types of polyolefin copolymers (c), it is preferable that MRF of the mixture of the polyolefin copolymers (c) be in the range described above.

The polyolefin copolymers (c) for use in the present embodiment is a copolymer of two or more olefins. The olefin is preferably an olefin having 2 to 5 carbon atoms, and ethylene, propylene and butene are preferred.

In the present embodiment, a copolymer of at least two or more of ethylene, propylene and butene is preferred, and specific examples thereof include an ethylene-propylene-butene copolymer, an ethylene-propylene copolymer, an ethylene-butene copolymer, and a propylene-butene copolymer. In particular, an ethylene-propylene-butene copolymer and an ethylene-butene copolymer are preferred and an ethylene-propylene-butene copolymer is more preferred.

Incidentally, the copolymer of two or more olefins in the present embodiment may contain another monomer in the range without departing from the spirit of the present invention. However, the copolymer of two or more olefins in the present embodiment includes preferably 95 mass% or more (more preferably 97 mass% or more, still more preferably 99 mass% or more) of olefin units. The same applies to a copolymer of at least two of ethylene, propylene and butene.

The content of the polyolefin copolymer (c) in the resin composition of the present embodiment is preferably 1.0 part by mass or more, more preferably 2.0 parts by mass or more, still more preferably 3.0 parts by mass or more, further preferably 4.0 parts by mass or more, and furthermore preferably 5.0 parts by mass or more in 100 parts by mass of the resin composition. With a content equal to or more than the lower limit, the impact resistance and the nominal tensile strain of the molded product tend to be further improved. The upper limit of the content of the polyolefin copolymer (c) is preferably 20.0 parts by mass or less, more preferably 15.0 parts by mass or less, still more preferably 12.0 parts by mass or less, further preferably 10.0 parts by mass or less, and may be 5.9 parts by mass or less in 100 parts by mass of the resin composition. With a content equal to or less than the upper limit, the heat resistance of the molded product tends to be further improved.

The resin composition of the present embodiment may include only one type of the polyolefin copolymer (c) or two types or more. In the case where two or more types are included, it is preferable that the total content be in the range described above.

### <Blending ratio of components (a) to (c)>

In the resin composition of the present embodiment, the blending ratio among the polyphenylene ether resin (a), the polypropylene homopolymer (b) and the polyolefin copolymer (c) is described as follows.

It is preferable that the composition of the present embodiment includes 40 to 65 mass% of the polyphenylene ether resin (a), and 35 to 60 mass% in total of the polypropylene homopolymer (b) and the polyolefin copolymer (c), relative to 100 mass% of the total of the components (a) to (c).

The content of the polyphenylene ether resin (a) relative to 100 mass% of the total of components (a) to (c) is more preferably 45 mass% or more, still more preferably 48 mass% or more, further preferably 50 mass% or more, and may be 51 mass% or more. With a content equal to or more than the lower limit, the heat resistance of the resulting molded product tends to be further improved. The content of the polyphenylene resin relative to 100 mass% of the total of the components (a) to (c) is preferably 60.0 mass% or less, more preferably 57 mass% or less, still more preferably 55 mass% or less, and further preferably 53 mass% or less. With a content equal to or less than the upper limit, the effects of improving fluidity of the resin composition and lowering the specific gravity of the resulting molded product tend to be further improved.

The total content of the polypropylene homopolymer (b) and the polyolefin copolymer (c) relative to 100 mass% of the total of components (a) to (c) is more preferably 40 mass% or more, still more preferably 43 mass% or more, further preferably 45 mass% or more, and furthermore preferably 47 mass% or more. With a content equal to or more than the lower limit, the effects of improving fluidity of the resin composition and lowering the specific gravity of the molded product tend to be further improved. The total content of the polypropylene homopolymer (b) and the polyolefin copolymer (c) relative to 100 mass% of the total of components (a) to (c) is preferably 55 mass% or less, more preferably 52 mass% or less, still more preferably 50 mass% or less, and further preferably 49 mass% or less. With a content equal to or less than the upper limit, the heat resistance of the resulting molded product tends to be further improved.

Further, the mass ratio between the polypropylene homopolymer (b) and the polyolefin copolymer (c), i.e. (b)/(c), is preferably 1.5 or more, more preferably 2.0 or more, still more preferably 2.5 or more, further preferably 3.0 or more, and furthermore preferably 3.5 or more. Also, the ratio (b)/(c) is preferably 14.0 or less, more preferably 10.0 or less, still more preferably 7.0 or less, and further preferably 6.0 or less.

### <Hollow inorganic filler (d)>

The resin composition of the present embodiment includes a hollow inorganic filler (d) at a proportion of 6 to 30 parts by mass in 100 parts by mass of the resin composition. In other words, the content of the hollow inorganic filler (d) in 100 mass% of the resin composition is 6 to 30 mass%.

With inclusion of the hollow inorganic filler (d), a resin composition having a low specific gravity can be obtained.

Examples of the hollow inorganic filler (d) include a silica balloon, an alumina balloon, a hollow glass particle, a hollow ceramic balloon, and a hollow glass particle and a hollow ceramic particle are preferred.

The apparent density of the hollow inorganic particle (d) is preferably 0.40 g/cm³ or more, more preferably 0.42 g/cm³ or more, still more preferably 0.44 g/cm³ or more, further preferably 0.45 g/cm³ or more, furthermore preferably 0.46 g/cm³ or more, and may be 0.47 g/cm³ or more depending on the use. With an apparent density equal to or more than the lower limit, the shell thickness of the hollow particle increases, so that fracturing during kneading into a resin tends to be suppressed. Also, the apparent density of the hollow inorganic particle (d) is preferably 0.65 g/cm³ or less, more preferably 0.6 g/cm³ or less, and may be 0.56 g/cm³ or less or 0.55 g/cm³ or less depending on the use. With an apparent density equal to or less than the upper limit, the specific gravity of the molded product tends to be more effectively lowered.

The apparent density of the hollow inorganic particle (d) can be calculated by weighing the mass with an electronic balance and measuring the volume with a gas pycnometer using helium gas as gas medium.

The hollow inorganic filler (d) has a compressive fracture strength of preferably 105 MPa or more, more preferably 108 MPa or more, and still more preferably 110 MPa or more. With a strength equal to or more than the lower limit, the crushing during kneading into the resin is suppressed and the specific gravity of the molded product tends to be effectively lowered. Also, the hollow inorganic filler (d) has a compressive fracture strength of preferably 130 MPa or less. With a strength equal to or less than the upper limit, the shell thickness of the hollow particle increases, so that the effect of lowering the specific gravity by the addition tends to be poor.

The compressive fracture strength of the hollow inorganic filler (d) means the hydrostatic pressure at which 10 vol.% of the hollow inorganic filler is destroyed, obtained through measurement of a dispersion in glycerol in accordance with ASTM D3102-72 "Hydrostatic Collapse Strength of Hollow Glass Microspheres".

The average particle size of the hollow inorganic filler (d) is a D50 value, which is preferably 5 µm or more, more preferably 10 µm or more, and still more preferably 15 µm or more. Also, the D50 value is preferably 50 µm or less, more preferably 40 µm or less, and still more preferably 30 µm or less.

In the resin composition of the present embodiment, the content of the hollow inorganic filler (d) in 100 mass parts of the resin composition is 6 parts by mass or more, preferably 8 parts by mass or more, and may be 12 parts by mass or more. With a content equal to or more than the lower limit, the specific gravity of the molded product tends to be effectively lowered. Also, the upper limit of the content of the hollow inorganic filler (d) in 100 mass parts of the resin composition is 30 parts by mass or less, and may be 28 parts by mass or less, 25 parts by mass or less, 20 parts by mass or less, 18 parts by mass or less, or 16 parts by mass or less, depending on the use. With a content equal to or less than the upper limit, lowering of the impact resistance and the mechanical strength of the molded product tends to be suppressed.

The resin composition of the present embodiment may include only one type of the hollow inorganic filler or two types or more. In the case where two or more types are included, it is preferable that the total content be in the range described above.

### <Block copolymer (e)>

The resin composition of the present embodiment includes a block copolymer (e) as hydrogenated product including a vinylaromatic compound block (e1) and an isoprene polymer block (e2). The block copolymer (e) included in the resin composition enhances the impact resistance of the resulting molded product and functions also as a compatibilizer. In other words, the vinyl aromatic compound block (e1) enhances the compatibility with the polyphenylene ether resin (a), and the isoprene polymer block (e2) enhances the compatibility with the polypropylene homopolymer (b) and the polyolefin copolymer (c).

It is presumed that use of the hydrogenated product allows the isoprene polymer block to have an alternating copolymer structure of ethylene and propylene, which has good affinity with the polypropylene homopolymer, resulting in various good physical properties.

Examples of the vinyl aromatic compound to constitute the vinyl aromatic compound block (e1) include a vinyl allyl compound, and at least one selected from the group consisting of styrene, α-methylstyrene, styrene substituted with an alkoxy group, 2-vinyl pyridine, vinyl naphthalene, and vinyl naphthalene substituted with an alkyl group is preferred, styrene and α-methylstyrene are more preferred, and styrene is still more preferred. Only one type or two or more types of vinyl aromatic compounds may be used.

The content of the vinyl aromatic compound unit in the block copolymer (e) for use in the present embodiment is preferably 50 mass% or more, more preferably 55 mass% or more, still more preferably 60 mass% or more, and further preferably 63 mass% or more. With a content equal to or more than the lower limit, the impact resistance of the resulting molded product can be effectively improved without lowering the heat resistance. Also, the content of the vinyl aromatic compound unit in the block copolymer (e) is preferably less than 80 mass%, more preferably 75 mass% or less, and still more preferably 70 mass% or less. With a content equal to or less than the upper limit, the impact resistance and the nominal tensile strain of the resulting molded product tend to be further improved.

The content of the isoprene unit in the block copolymer (e) for use in the present embodiment is preferably 20 mass% or more, more preferably 25 mass% or more, and still more preferably 30 mass% or more. With a content equal to or more than the lower limit, the impact resistance and the nominal tensile strain of the resulting molded product tend to be improved. Also, the content of the isoprene unit in the block copolymer (e) is preferably 50 mass% or less, more preferably 47 mass% or less, still more preferably 40 mass% or less, and may be 35 mass% or less. With the content equal to or less than the upper limit, the effect of enabling to effectively improve the impact resistance of the resulting molded product without lowering of the heat resistance tends be further improved.

In the block copolymer (e) for use in the present embodiment, the vinyl aromatic compound unit and the isoprene unit comprises preferably 90 mass% or more of the block copolymer (e), and the content may be 95 mass% or more or 99 mass% or more.

The block copolymer (e) for use in the present embodiment is preferably SEPS. SEPS is represented by the following structural formula, wherein l, m and n are each a number more than 0.

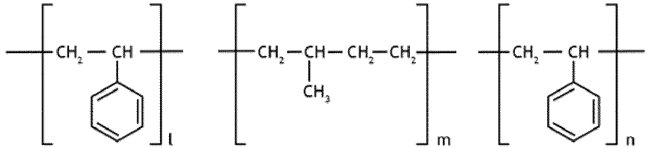

The block copolymer (e) for use in the present embodiment is a hydrogenated product which may be a partially hydrogenated product or a wholly hydrogenated product, and a wholly hydrogenated product is preferred.

The content of the block copolymer (e) in the resin composition of the present embodiment relative to 100 parts by mass of the resin composition is preferably 5 parts by mass or more, more preferably 7 parts by mass or more, still more preferably 10 parts by mass or more, and further preferably 13 parts by mass or more. With a content equal to or more than the lower limit, the impact resistance of the molded product tends to be improved. Also, the upper limit of the content of the block copolymer (e) in 100 parts by mass of the resin composition is preferably 25 parts by mass or less, more preferably 20 parts by mass or less, still more preferably 17 parts by mass or less, and further preferably 16 parts by mass or less. With a content equal to or less than the upper limit, lowering of the heat resistance tends to be suppressed.

The resin composition of the present embodiment may include only one type of the block copolymer (e) or two types or more. In the case where two or more types are included, it is preferable that the total content be in the range described above.

In the present embodiment, it is preferable that the block copolymer (e) flows in measurement under a load of 2.16 kg and at a temperature of 230°C in accordance with JIS K7210. Specifically, the melt flow rate (MFR) under a load of 2.16 kg and at a temperature of 230°C, as measured in accordance with JIS K7210, is preferably 0.1 g/10 minutes or more, more preferably 0.15 g/10 minutes or more, and still more preferably 0.3 g/10 minutes or more. With the melt flow rate equal to or more than the lower limits, the fluidity of the resin composition is improved, so that the moldability tends to be further improved. MFR under the same conditions is preferably 7.0 g/10 minutes or less, more preferably 5.0 g/10 minutes or less, still more preferably 3.0 g/10 minutes or less, furthermore preferably 2.0 g/10 minutes or less, and may be 1.0 g/10 minutes or less. With the melt flow rate equal to or less than the upper limits, the impact resistance tends to be further improved.

The difference in MFR between the block copolymer (e) and the polypropylene homopolymer (b), i.e. (MFR (b) - MFR (e)), is preferably 1.0 g/10 minutes or more, and preferably 3.0 g/10 minutes or less.

The difference in MFR between the block copolymer (e) and the polyolefin copolymer (c), i.e. (MFR (c) - MFR (e)), is preferably 0.1 g/10 minutes or more, and preferably 10.0 g/10 minutes or less.

Within such a controlled range, the effect of the present invention tends to be exhibited more effectively.

### <(f) Low molecular weight polystyrene resin>

It is preferable that the resin composition of the present embodiment include a polystyrene resin (f) having a weight average molecular weight (Mw) of 3000 to 20000 (in the following, referred to as "low molecular weight polystyrene (f)" in some cases). By containing the low molecular weight polystyrene (f), the impact resistance and bending strength of the resulting molded product tend to be improved.

The low molecular weight polystyrene resin (f) has a weight average molecular weight of 3000 or more, preferably 5000 or more, more preferably 7000 or more, and still more preferably 8000 or more. With the weight average molecular weight equal to or less than the lower limit, the mechanical properties such as tensile properties and bending properties of the whole resin composition tend to be deteriorated. The low molecular weight polystyrene resin (f) has a weight average molecular weight of 20000 or less, preferably 18000 or less, more preferably 15000 or less, and still more preferably 12000 or less. With the weight average molecular weight equal to or less than the upper limit, the fluidity of the polyphenylene ether resin is enhanced, the dispersibility of a polyphenylene ether domain is improved, and the impact resistance of the resulting molded product tends to be improved.

The weight average molecular weight of the low molecular weight polystyrene resin (f) is a molecular weight in terms of polystyrene measured by gel permeation chromatography (GPC).

The low molecular weight polystyrene resin (f) for use in the present embodiment may be a styrene homopolymer (polystyrene) or a copolymer of styrene and another monomer. In the present embodiment, the low molecular weight polystyrene resin (f) comprises preferably 50 mass% or more of the whole structural units, more preferably 70 mass% or more, still more preferably 90 mass% or more, and the content may be 95 mass% or more.

In the case where the low molecular weight polystyrene resin (f) for use in the present embodiment is a copolymer of styrene and another monomer, examples thereof include a styrene acrylic resin, an acrylonitrile butadiene styrene resin, a styrene acrylonitrile resin, a styrene butadiene resin, and styrene ethylene butadiene resin.

In the case where the resin composition of the present embodiment includes the low molecular weight polystyrene resin (f), the content thereof relative to 100 parts by mass of the resin components (total of the components (a) to (c) and (e)) is preferably 0.5 parts by mass or more, more preferably 1.0 part by mass or more, and still more preferably 2.0 parts by mass or more. With the content equal to or more than the lower limit, the dispersibility of a polyphenylene ether domain is improved, and the impact resistance of the resulting molded product tends to be improved. Also, the upper limit of the content of the low molecular weight polystyrene resin (f) relative to 100 parts by mass of the resin composition is preferably 10.0 parts by mass or less, more preferably 7.0 parts by mass or less, still more preferably 6.0 parts by mass or less, further preferably 5.0 parts by mass or less, furthermore preferably 4.5 parts by mass or less, and even further preferably 4.0 parts by mass or less. With the content equal to or less than the upper limit, deterioration of the heat resistance and mechanical properties such as tensile properties and bending properties tend to be effectively suppressed.

The resin composition of the present embodiment may contain only one type of low molecular weight polystyrene resin (f), or may contain two or more types. In the case where two or more types are contained, it is preferable that the total amount be controlled to the range.

### <Other components>

The resin composition of the present embodiment may contain components other than the above.

Specific examples of the other components include a thermoplastic resin such as a polyamide resin, a polyester resin, a polyphenylene sulfide resin, a liquid crystalline polyester resin, a polycarbonate resin, a polyacetal resin, a polyacrylonitrile resin, an acrylic resin and a polyethylene resin, and a thermosetting resin such as an epoxy resin, a melamine resin and a silicone resin. These thermoplastic resins and the thermosetting resins may be used in combination of two or more types.

Further, the resin composition of the present embodiment may contain a resin additive. Specifically, a stabilizer, a coloring agent, an internal lubricant (metal salt of fatty acid, polyethylene wax, etc.), thermal stabilizer (zinc oxide, etc.), a mold release agent (silicone oil, fatty acid, fatty acid ester, etc.), a weather resistance improver, a nucleating agent, an impact resistance improver, a plasticizer, a fluidity improver, etc., may be included. In the case where these components are contained, it is preferable that the content in total be controlled to the range of 0.01 to 5 mass% relative to the resin composition.

The resin composition of the present embodiment is prepared such that the total content of the polyphenylene ether resin (a), the polypropylene homopolymer (b), the polyolefin copolymer (c), the hollow inorganic filler (d), and the block copolymer (e), and other components blended on an as needed basis is 100 mass%.

Also, in the resin composition of the present embodiment, the total of the polyphenylene ether resin (a), the polypropylene homopolymer (b), the polyolefin copolymer (c), the hollow inorganic filler (d), and the block copolymer (e) comprises preferably 92 mass% or more, more preferably 94 mass% or more, and still more preferably 96 mass% or more, of the resin composition.

Also, in the resin composition of the present embodiment, the total of the polyphenylene ether resin (a), the polypropylene homopolymer (b), the polyolefin copolymer (c), the hollow inorganic filler (d), and the block copolymer (e), and the low molecular weight polystyrene resin (f), a stabilizer, and a pigment blended on an as needed basis comprises preferably 95 mass% or more, more preferably 97 mass% or more, and still more preferably 99 mass% or more, of the resin composition.

### <<Stabilizer>>

The resin composition of the present embodiment may contain a stabilizer such as a thermal stabilizer and an antioxidant.

Examples of the stabilizer include a phenol-based stabilizer, an amine-based stabilizer, a phosphorus-based stabilizer, a thioether-based stabilizer, and an inorganic thermal stabilizer such as zinc oxide. In the present embodiment, a phenol-based stabilizer and zinc oxide are particularly preferred. The stabilizers may be referred to the descriptions in paragraph 0036 in International Publication No. 2019/026689 and in paragraphs 0044 to 0046 in Japanese Patent Laid Open No. 2022-001624, and the contents thereof are incorporated in the present specification.

As the phenol-based stabilizer, a hindered phenol-based stabilizer is preferably used. Specific examples of the hindered phenol-based stabilizer include pentaerythritol tetrakis[3-(3,5-di-tert-butyl-4-hydroxyphenyl)propionate], octadecyl-3-(3,5-di-tert-butyl-4-hydroxyphenyl)propionate, thiodiethylene bis[3-(3,5-di-tert-butyl-4-hydroxyphenyl)propionate], N,N'-hexane-1,6-diyl bis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl]phosphate, 3,3',3",5,5',5"-hexa-tert-butyl-a,a',a"-(mesitylene-2,4,6-triyl)tri-p-cresol, 4,6-bis(octyl thiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate], 1,3,5-tris(3,5-di-tert-butyl-4-hydroxybenzyl)-1,3,5-triazine-2,4,6(1H, 3H, 5H)-trione, 2,6-di-tert-butyl-4-(4,6-bis(octylthio)-1,3,5-triazine-2-ylamino) phenol, and 2-[1-(2-hydroxy-3,5-di-tert-pentylphenyl)ethyl]-4,6-di-tert-pentylphenyl acrylate.

In particular, pentaerythritol tetrakis[3-(3,5-di-tert-butyl-4-hydroxyphenyl)propionate] and octadecyl-3-(3,5-di-tert-butyl-4-hydroxyphenyl)propionate are preferred. Specific examples of such a hindered phenol-based stabilizer include "Irganox (registered trademark, same applies hereafter) 1010" and "Irganox 1076" manufactured by BASF, and "ADEKA STAB AO-50" and "ADEKA STAB AO-60" manufactured by ADEKA Corporation.

The content of the stabilizer in the resin composition of the present embodiment in 100 parts by mass of the resin composition is preferably 0.001 parts by mass or more, more preferably 0.005 parts by mass or more, still more preferably 0.01 parts by mass or more, further preferably 0.08 parts by mass or more, and preferably 3 parts by mass or less, more preferably 2 parts by mass or less, and still more preferably 1 part by mass or less. With the content of the stabilizer controlled to the range, the addition effect of a stabilizer is more effectively exhibited.

The resin composition of the present embodiment may contain only one type of stabilizer, or may contain two or more types. In the case where two or more types are contained, it is preferable that the total amount be in the range.

### <<Coloring agent>>

The resin composition of the present embodiment may contain a coloring agent. Containing a coloring agent allows the resulting molded product to have a color, so that the design tends to be improved.

The coloring agent may be a pigment or a dye, and a pigment is preferred.

Examples of the pigment include an inorganic pigment (black color pigment such as carbon black, red color pigment such as iron oxide red, orange color pigment such as molybdate orange, and white color pigment such as titanium oxide), and an organic pigment (yellow color pigment, orange color pigment, red color pigment, blue color pigment, green color pigment, etc.), and an inorganic pigment is preferred. Carbon black is preferred as black color pigment, and zinc sulfide is preferred as white pigment. It is preferable that substantially no titanium oxide be included as white pigment, because due to high hardness thereof, fracturing of the hollow inorganic filler (d) is caused. Including substantially none means that the content of titanium oxide in 100 parts by mass of the resin composition is, for example, less than 0.01 parts by mass, preferably less than 0.005 parts by mass, more preferably less than 0.001 parts by mass, and still more preferably less than 0.0001 parts by mass.

In the case where the coloring agent is blended into the resin composition of the present embodiment, a master batch may be made for the blending.

In the case where the resin composition of the present embodiment includes a coloring agent, the content thereof relative to 100 parts by mass of the resin composition is preferably 0.01 parts by mass or more, more preferably 0.1 parts by mass, still more preferably 0.3 parts by mass or more, further preferably 0.5 parts by mass or more, and may be 0.9 parts by mass or more in the case where the molded product tends to have white streaks. The content of the coloring agent relative to 100 parts by mass of the resin composition is preferably 10.0 parts by mass or less, more preferably 5.0 parts by mass or less, and still more preferably 3.0 part by mass or less.

The resin composition of the present embodiment may contain only one type of coloring agent, or may contain two or more types. In the case two or more types are contained, it is preferable that the total amount be controlled to the range.

### <Production method of resin composition>

An optional method may be employed as the production method of the resin composition of the present embodiment.

Examples of the method include steps of mixing each of the components including the polyphenylene ether resin (a), the polypropylene homopolymer (b), the polyolefin copolymer (c), the hollow inorganic filler (d) and the block copolymer (e) by a mixing means such as V-type blender to prepare a blended batch and then melt kneading the mixture with a vented extruder to make pellets. Alternative examples of the method include a two-step kneading including sufficiently mixing a part of the components, then melt kneading the mixture with a vented extruder to make pellets, then mixing the pellets and the other components and melt kneading the mixture with a vented extruder.

The hollow inorganic filler (d) may be fed from the side.

### <Properties of resin composition>

The resin composition of the present embodiment satisfies particularly the following properties.

It is preferable that the resin composition of the present embodiment have a small specific gravity. Specifically, the specific gravity of the resin composition of the present embodiment is preferably 0.93 g/cm³ or less, more preferably 0.92 g/cm³ or less, still more preferably 0.91 g/cm³ or less, further preferably 0.90 g/cm³ or less, and furthermore preferably 0.89 g/cm³ or less. The lower limit is practically 0.80 g/cm³ or more, and the performance requirements are sufficiently satisfied even with a specific gravity of 0.85 g/cm³.

It is preferable that the resin composition of the present embodiment have excellent impact resistance. Specifically, the notched Charpy impact strength in accordance with ISO-179-1 and ISO179-2 when the resin composition of the present embodiment is molded into an ISO test piece is preferably 4.9 kJ/m² or more, more preferably 5.0 kJ/m² or more, still more preferably 5.3 kJ/m² or more, further preferably 5.3 kJ/m² or more, furthermore preferably 5.6 kJ/m² or more, and even furthermore preferably 5.6 kJ/m² or more. The upper limit is not particularly specified, practically 12.0 kJ/m² or less.

It is preferable that the resin composition of the present embodiment has excellent heat resistance. Specifically, when the resin composition of the present embodiment is molded into an ISO test piece, the deflection temperature under a load of 1.80 MPa in accordance with ISO-75-2 is preferably 61°C or more, more preferably 70°C or more, still more preferably 75°C or more, further preferably 78°C or more, and furthermore preferably 80°C or more. Also, the upper limit is not particularly specified, practically 110°C or less.

The Charpy impact strength and the deflection temperature under load are measured in accordance with the methods described in the following Examples.

### <Molding of resin composition>

The resin composition of the present embodiment is pelletized for use. Also, the molded product of the present embodiment is molded from the resin composition or pellet of the present embodiment.

The production method for the molded product in the present embodiment is not particularly limited, and a molding method generally employed for a resin composition may be optionally employed. Examples of the method include injection molding, ultra high-speed injection molding, injection compression molding, two-color molding, hollow molding such as gas assisting, molding with use of insulated mold, molding with use of rapid heating mold, foam molding (including supercritical fluid), insert molding, IMC (insert mold coating) molding, extrusion molding, sheet forming, thermoforming, rotational molding, laminate molding, press molding, and blow molding. Alternatively, molding with use of a hot runner system may be used.

### <Use of resin composition, pellet and molded product>

The resin composition, the pellet and the molded product of the present embodiment are widely used for applications in which a polyphenylene ether resin, particularly a blended product of a polyphenylene ether resin and a styrene-based resin, is generally used.

Examples of the application include automobile exterior/body parts, automobile interior parts, and automobile underhood parts. Specifically, the resin composition is suitable for automobile exterior/body parts such as bumpers, fenders, door panels, malls, emblems, engine hoods, wheel covers, roofs, spoilers and engine covers, underhood parts, and interior parts such as instrument panels and console box trims.

Further, the resin composition may be used for cabinets or chassis of various computers and peripheral equipment thereof, other office automation apparatuses, TV sets, video equipment, and various disc players, refrigerators, air conditioners, and liquid crystal projectors.

Furthermore, the resin composition may be used as fuel cases for solid-state methanol batteries, secondary battery cases, water conduits for fuel cells, water cooling tanks, boiler exterior cases, ink peripheral parts/members and chassis of ink jet printers, and molded products such as water pipes and joints.

In the present embodiment, in particular, use as an enclosure for wearable terminals is preferred.

### [Examples]

The present invention is more specifically described with reference to Examples. The material, amount used, ratio, processing details and processing procedure in the following Examples may be appropriately changed without departing from the spirit of the present invention. Accordingly, the scope of the present invention is not limited to the following specific examples.

In the case where the measurement instruments used in Examples are unavailable due to discontinued production or the like, other instruments having the same performance may be used for the measurement.

### 1. Raw materials

The following raw materials were used.

**[Table 1]**

| Classification of component | | Product name | Details |
|---|---|---|---|
| PPE resin (a) | (a) | PX100F | Polyphenylene ether resin, manufactured by Polyxylenol Singapore Pte Ltd. |
| PP resin (b) | (b) | Novatec PP FY6C | Polypropylene resin, manufactured by Japan Polypropylene Corporation, MFR: 2.4 a/10 minutes |
| Polyolefin copolymer (c) | (c-1) | TAFMER PN 3560 | Ethylene-propylene-butene copolymer, manufactured by Mitsui Chemicals, Inc., MFR at 230°C: 6.0 a/10 minutes |
| | (c-2) | TAFMER P-0680 | Ethylene-propylene copolymer, manufactured by Mitsui Chemicals, Inc., MFR at 230°C: 0.8 g/10 minutes |
| | (c-3) | TAFMER DF 940 | Ethylene-butene copolymer, manufactured by Mitsui Chemicals, Inc., MFR at 230°C: 6.7 a/10 minutes |
| Polyolefin copolymer (cx) | (cx-1) | TAFMER PN 20300 | Ethylene-propylene-butene copolymer, manufactured by Mitsui Chemicals, Inc., MFR at 230°C: 30 g/10 minutes |
| Hollow inorganic filler (d) | (d-1) | 3-3# | Manufactured by Dongwoo Fine-Chem Co., Ltd., true density: 0.46 g/cm³, compressive fracture strength: 113 MPa, median diameter D50: 15.8 µm |
| | (d-2) | 3-3#SF | Hollow ceramic particle, manufactured by Dongwoo Fine-Chem Co., Ltd., apparent density: 0.46 g/cm³, compressive fracture strength: 113 MPa, median diameter D50: 16.1 µm, surface treated with epoxy-based silane coupling agent |
| | (d-3) | 3-4# | Hollow ceramic particle, manufactured by Dongwoo Fine-Chem Co., Ltd., apparent density: 0.51 g/cm³, compressive fracture strength: 118 MPa, median diameter D50: 20.1 µm |
| | (d-4) | 3-5# | Hollow ceramic particle, manufactured by Dongwoo Fine-Chem Co., Ltd., apparent density: 0.55 g/cm³, compressive fracture strength: 124 MPa, median diameter D50: 18.3 µm |
| | (d-5) | 3-6# | Hollow ceramic particle, manufactured by Dongwoo Fine-Chem Co., Ltd., apparent density: 0.59 g/cm³, compressive fracture strength: 128 MPa, median diameter D50: 16.3 µm |
| | (d-6) | 3-6#SF | Hollow ceramic particle, manufactured by Dongwoo Fine-Chem Co., Ltd., apparent density: 0.59 g/cm³, compressive fracture strength: 128 MPa, median diameter D50: 16.8 µm, surface treated with epoxy-based silane coupling agent |
| | (d-7) | iM16K | Hollow glass particle, manufactured by 3M Japan Ltd., apparent density: 0.46 g/cm³, compressive fracture strength: 110 MPa, median diameter D50: 20 µm |
| | (d-8) | S60HS | Hollow glass particle, manufactured by 3M Japan Ltd., apparent density: 0.60 g/cm³, compressive fracture strength: 124 MPa, median diameter D50: 30 µm |

**[Table 2]**

| Classification of component | | Product name | Details |
|---|---|---|---|
| (e) SEEPS | (e) | SEPTON 2104 | SEPS, manufactured by Kuraray Co., Ltd., styrene content: 65 mass%, MFR: 0.4 g/10 minutes |
| (ex) SEBS | (ex-1) | TUFTEC H1043 | SEBS, manufactured by Asahi Kasei Corporation, styrene content: 67 mass%, MFR: 2.0 g/10 minutes |
| | (ex-2) | TUFTEC H1041 | SEBS, manufactured by Asahi Kasei Corporation, styrene content: 30 mass%, MFR: 5.0 g/10 minutes |
| Low molecular weight polystyrene resin (f) | (f) | HMST120 | Low molecular weight polystyrene, Himer ST120, manufactured by Sanyo Chemical Industries, Ltd., weight average molecular weight: 10000, glass transition temperature: 42°C |
| Stabilizer or the like (g) | (g-1) | PEPQ | Phosphorus-based stabilizer, HOSTANOX P-EPQ, manufactured by Clariant Chemicals |
| | (g-2) | Irganox1010 | Hindered phenol-based stabilizer, manufactured by BASF Japan Ltd. |
| Coloring agent (h) | (h) | BLACK-SBF M8800 | Black pigment polystyrene master batch, manufactured by Resino Color Industry Co., Ltd., carbon black: 45 to 55 mass% |

The MFR described above means the melt flow rate under a load of 2.16 kg and at a temperature of 230°C, as measured in accordance with JIS K7210.

The SEBS described above is a hydrogenated block copolymer composed of styrene and butadiene.

### 2. Examples 1 to 14 and Comparative Examples 1 to 5

Each of the components was mixed at a ratio (mass part basis) shown in the following Tables 3 to 6, and the mixture was melt kneaded using a twin screw extruder (manufactured by Shibaura Machine Co., Ltd., TEM26SX) at a cylinder temperature of 280°C and a screw speed of 200 rpm to obtain a resin composition (pellets).

The resulting resin composition (pellets) was subjected to the following evaluation. The results are shown in Tables 3 to 6.

### <Ash content>

The pellet in amount of 2 g obtained by the production method described above was converted into ash by a method in accordance with JIS7250 A, and the ash content was measured.

The ash content is shown in unit of mass%.

### <Preparation of ISO test piece>

The pellets obtained by the production method described above were dried at 100°C for 2 hours, and then injection molded into an ISO 3167: 93A type test piece (in the following, referred to as "ISO test piece") of 4 mm thick using an injection molding machine ("EC75SX" manufactured by Shibaura Machine Co., Ltd.) in accordance with ISO-15103 under conditions at a cylinder temperature of 270°C and a mold temperature of 70°C.

### <Specific gravity>

The ISO test piece thus obtained was machined into a test piece to measure the specific gravity (g/cm³) by the method A in accordance with JIS K7112.

### <Notched Charpy impact strength>

The resulting ISO test piece was machined to cut off the grip part at both ends and notched at the center to make a notched Charpy impact test piece in accordance with ISO-179-1 and ISO179-2. The resulting notched Charpy impact test piece was subjected to the measurement of notched Charpy impact strength (kJ/m²) at 23°C in accordance with ISO-179-1 and ISO179-2 for the evaluation of impact resistance.

### <Deflection temperature under load (DTUL)>

The parallel part of an ISO test piece thus obtained was machined into a 80 mm by 10 mm by 4 mm thick strip-shaped test piece, which was subjected to measurement of the deflection temperature (unit: °C) under a load of 1.80 MPa in accordance with ISO-75-2.

### <Tensile strength and nominal tensile strain>

In accordance with ISO-527, the ISO test piece thus obtained was subjected to measurement of the tensile strength (unit: MPa) and the nominal tensile strain (unit: %).

### <Bending strength and bending elastic modulus>

The parallel part of an ISO test piece thus obtained was machined into a 80 mm by 10 mm by 4 mm thick strip-shaped test piece, which was subjected to measurement of the bending strength (unit: MPa) and the bending elastic modulus (unit: MPa) under an environment at a temperature of 23°C and a humidity of 50% in accordance with ISO-178.

**[Table 3]**

| Component | Example 1 | Example 2 | Example 3 | Example 4 | Example 5 |
|---|---|---|---|---|---|
| (a) | 36.90 | 36.90 | 36.90 | 34.85 | 34.85 |
| (b) | 30.60 | 30.60 | 30.60 | 28.90 | 28.90 |
| (c-1) | 5.40 | 5.40 | 5.40 | 5.10 | 5.10 |
| (c-2) | | | | | |
| (c-3) | | | | | |
| (cx-1) | | | | | |
| (d-1) | 10.00 | | | | |
| (d-2) | | 10.00 | | | |
| (d-3) | | | 10.00 | 15.00 | |
| (d-4) | | | | | 15.00 |
| (d-5) | | | | | |
| (d-6) | | | | | |
| (d-7) | | | | | |
| (d-8) | | | | | |
| (e) | 13.50 | 13.50 | 13.50 | 12.75 | 12.75 |
| (ex-1) | | | | | |
| (ex-2) | | | | | |
| (f) | 2.61 | 2.61 | 2.61 | 2.47 | 2.47 |
| (g-1) | 0.05 | 0.05 | 0.05 | 0.04 | 0.04 |
| (g-2) | 0.05 | 0.05 | 0.05 | 0.04 | 0.04 |
| (h) | 0.90 | 0.90 | 0.90 | 0.85 | 0.85 |
| | | | | | |
| Ash content (mass%) | 9.7 | 9.5 | 9.4 | 14.3 | 14.4 |
| Specific gravity (g/cm³) | 0.91 | 0.91 | 0.92 | 0.89 | 0.90 |
| Notched Charpy impact strength (kJ/m²) | 6.7 | 7.2 | 7.1 | 6.0 | 6.0 |
| Deflection temperature under load (°C) | 83 | 82 | 84 | 85 | 85 |
| Tensile strength (MPa) | 34 | 34 | 34 | 33 | 32 |
| Nominal tensile strain (%) | 20 | 20 | 24 | 18 | 18 |
| Bending strength (MPa) | 49 | 49 | 50 | 50 | 51 |
| Bending elastic modulus (MPa) | 1839 | 1822 | 1823 | 1969 | 1982 |

**[Table 4]**

| Component | Example 6 | Example 7 | Example 8 | Example 9 | Example 10 |
|---|---|---|---|---|---|
| (a) | 34.85 | 34.85 | 34.85 | 34.85 | 36.11 |
| (b) | 28.90 | 28.90 | 25.50 | 28.90 | 29.92 |
| (c-1) | 5.10 | 5.10 | 8.50 | 5.10 | 5.28 |
| (c-2) | | | | | |
| (c-3) | | | | | |
| (cx-1) | | | | | |
| (d-1) | | | | | |
| (d-2) | | | | | |
| (d-3) | | | | | 15.00 |
| (d-4) | | | | | |
| (d-5) | 15.00 | | | | |
| (d-6) | | 15.00 | | | |
| (d-7) | | | 15.00 | | |
| (d-8) | | | | 15.00 | |
| (e) | 12.75 | 12.75 | 12.75 | 12.75 | 12.75 |
| (ex-1) | | | | | |
| (ex-2) | | | | | |
| (f) | 2.47 | 2.47 | 2.47 | 2.47 | 0.00 |
| (g-1) | 0.04 | 0.04 | 0.04 | 0.04 | 0.04 |
| (g-2) | 0.04 | 0.04 | 0.04 | 0.04 | 0.04 |
| (h) | 0.85 | 0.85 | 0.85 | 0.85 | 0.85 |
| | | | | | |
| Ash content (mass%) | 14.4 | 14.0 | 14.0 | 14.3 | 14.8 |
| Specific gravity (g/cm³) | 0.91 | 0.91 | 0.87 | 0.91 | 0.89 |
| Notched Charpy impact strength (kJ/m²) | 6.0 | 6.2 | 6.7 | 6.0 | 5.4 |
| Deflection temperature under load (°C) | 86 | 86 | 77 | 84 | 83 |
| Tensile strength (MPa) | 32 | 34 | 30 | 31 | 31 |
| Nominal tensile strain (%) | 15 | 19 | 23 | 18 | 19 |
| Bending strength (MPa) | 51 | 52 | 42 | 49 | 47 |
| Bending elastic modulus (MPa) | 2014 | 2007 | 1607 | 1916 | 1820 |

**[Table 5]**

| Component | Example 11 | Example 12 | Example 13 | Example 14 |
|---|---|---|---|---|
| (a) | 34.85 | 34.85 | 34.85 | 31.57 |
| (b) | 25.50 | 28.90 | 28.90 | 23.10 |
| (c-1) | 8.50 | | | 7.70 |
| (c-2) | | 5.10 | | |
| (c-3) | | | 5.10 | |
| (cx-1) | | | | |
| (d-1) | | | | |
| (d-2) | | | | |
| (d-3) | 15.00 | 15.00 | 15.00 | 23.00 |
| (d-4) | | | | |
| (d-5) | | | | |
| (d-6) | | | | |
| (d-7) | | | | |
| (d-8) | | | | |
| (e) | 12.75 | 12.75 | 12.75 | 11.55 |
| (ex-1) | | | | |
| (ex-2) | | | | |
| (f) | 2.47 | 2.47 | 2.47 | 2.00 |
| (g-1) | 0.04 | 0.04 | 0.04 | 0.04 |
| (g-2) | 0.04 | 0.04 | 0.04 | 0.04 |
| (h) | 0.85 | 0.85 | 0.85 | 1.00 |
| | | | | |
| Ash content (mass%) | 14.6 | 14.6 | 14.6 | 21.5 |
| Specific gravity (g/cm³) | 0.90 | 0.90 | 0.90 | 0.83 |
| Notched Charpy impact strength (kJ/m²) | 6.0 | 6.9 | 6.2 | 6.0 |
| Deflection temperature under load (°C) | 78 | 84 | 85 | 80 |
| Tensile strength (MPa) | 29 | 30 | 30 | 27 |
| Nominal tensile strain (%) | 24 | 10 | 9 | 15 |
| Bending strength (MPa) | 43 | 48 | 49 | 42 |
| Bending elastic modulus (MPa) | 1623 | 1906 | 1977 | 1790 |

**[Table 6]**

| Component | Comparative Example 1 | Comparative Example 2 | Comparative Example 3 | Comparative Example 4 | Comparative Example 5 |
|---|---|---|---|---|---|
| (a) | 38.95 | 41.48 | 34.85 | 34.85 | 34.85 |
| (b) | 32.30 | 34.03 | 28.90 | 28.90 | 28.90 |
| (c-1) | 5.70 | 6.08 | 5.10 | 5.10 | |
| (c-2) | | | | | |
| (c-3) | | | | | |
| (cx-1) | | | | | 5.10 |
| (d-1) | 5.00 | | | | |
| (d-2) | | | | | |
| (d-3) | | 15.00 | 15.00 | 15.00 | 15.00 |
| (d-4) | | | | | |
| (d-5) | | | | | |
| (d-6) | | | | | |
| (d-7) | | | | | |
| (d-8) | | | | | |
| (e) | 14.25 | | | | 12.75 |
| (ex-1) | | | 12.75 | | |
| (ex-2) | | | | 12.75 | |
| (f) | 2.76 | 2.47 | 2.47 | 2.47 | 2.47 |
| (g-1) | 0.05 | 0.04 | 0.04 | 0.04 | 0.04 |
| (g-2) | 0.05 | 0.04 | 0.04 | 0.04 | 0.04 |
| (h) | 0.95 | 0.85 | 0.85 | 0.85 | 0.85 |
| | | | | | |
| Ash content (mass%) | 4.9 | 14.7 | 15.0 | 14.9 | 15.0 |
| Specific gravity (g/cm³) | 0.94 | 0.88 | 0.88 | 0.90 | 0.89 |
| Notched Charpy impact strength (kJ/m²) | 8.5 | 1.4 | 8.6 | 3.8 | 4.8 |
| Deflection temperature under load (°C) | 84 | 104 | 60 | 87 | 80 |
| Tensile strength (MPa) | 35 | 25 | 22 | 33 | 30 |
| Nominal tensile strain (%) | 27 | 3 | 26 | 10 | 16 |
| Bending strength (MPa) | 51 | 45 | 27 | 52 | 45 |
| Bending elastic modulus (MPa) | 1742 | 2071 | 864 | 1967 | 1867 |

As shown in the results, the resin composition of the present invention is a resin composition which includes a polyphenylene ether resin and a hollow inorganic filler and has a low specific gravity. From the resin composition, a molded product excellent in impact resistance while having heat resistance can be provided. Furthermore, the molded product is excellent in tensile properties and bending properties.

## Claims

1. A resin composition comprising;
a polyphenylene ether resin (a),
a polypropylene homopolymer (b),
a polyolefin copolymer (c) having a melt flow rate (MFR) of 0.3 to 25 g/10 minutes under a load of 2.16 kg and at a temperature of 230°C, as measured in accordance with JIS K7210,
a hollow inorganic filler (d), and
a block copolymer (e),
wherein the block copolymer (e) is a hydrogenated product including a vinylaromatic compound block (e1) and an isoprene polymer block (e2), and the content of the hollow inorganic filler (d) in 100 mass parts of the resin composition is 6 to 30 parts by mass.

2. The resin composition according to claim 1, wherein the content of the hollow inorganic filler (d) in 100 mass parts of the resin composition is 6 to 20 parts by mass.

3. The resin composition according to claim 1 or 2, wherein the hollow inorganic filler (d) has a compressive fracture strength of 105 to 130 MPa.

4. The resin composition according to claim 1 or 2, wherein relative to 100 mass% of the total of polyphenylene ether resin (a), the polypropylene homopolymer (b) and the polyolefin copolymer (c), the content of the polyphenylene ether resin (a) is 40 to 65 mass%, and the total content of the polypropylene homopolymer (b) and the polyolefin copolymer (c) is 35 to 60 mass%.

5. The resin composition according to claim 1 or 2, further comprising a polystyrene resin (f) having a weight average molecular weight (Mw) of 3000 to 20000.

6. The resin composition according to claim 1 or 2, wherein the block copolymer (e) has a content of vinylaromatic compound unit of 50 mass% or more and less than 80 mass%.

7. The resin composition according to claim 1 or 2,
wherein the hollow inorganic filler (d) has a compressive fracture strength of 105 to 130 MPa,
relative to 100 mass% of the total of polyphenylene ether resin (a), the polypropylene homopolymer (b) and the polyolefin copolymer (c), the content of the polyphenylene ether resin (a) is 40 to 65 mass%, and the total content of the polypropylene homopolymer (b) and the polyolefin copolymer (c) is 35 to 60 mass%,
the resin composition further comprises a polystyrene resin (f) having a weight average molecular weight (Mw) of 3000 to 20000, and
the block copolymer (e) has a content of vinylaromatic compound unit of 50 mass% or more and less than 80 mass%.

8. A pellet comprising the resin composition according to claim 1 or 2.

9. A molded product molded from the resin composition according to claim 1 or 2.

10. A molded product formed from the pellet according to claim 8.
